(19) Europäisches Patentamt
European Patent Office
Office européen des brevets

(11) **EP 3 443 304 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(21) Anmeldenummer: **17713943.3**

(22) Anmeldetag: **28.03.2017**

(51) Int Cl.:
**G01B 11/00** (2006.01)   **G01D 5/347** (2006.01)
**G01D 5/38** (2006.01)

(86) Internationale Anmeldenummer:
**PCT/EP2017/057255**

(87) Internationale Veröffentlichungsnummer:
**WO 2017/178224 (19.10.2017 Gazette 2017/42)**

(54) **POSITIONSMESSANORDNUNG UND VERFAHREN ZUM BETRIEB EINER POSITIONSMESSANORDNUNG**

POSITION MEASURING DEVICE AND METHOD FOR OPERATING A POSITION MEASURING DEVICE

DISPOSITIF DE MESURE DE POSITION ET PROCEDE DE FONCTIONNEMENT D'UN DISPOSITIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2016 DE 102016206144**

(43) Veröffentlichungstag der Anmeldung:
**20.02.2019 Patentblatt 2019/08**

(73) Patentinhaber: **Dr. Johannes Heidenhain GmbH 83301 Traunreut (DE)**

(72) Erfinder:
• **MUSCH, Bernhard**
 **83278 Traunstein (DE)**
• **KÄLBERER, Thomas**
 **86529 Schrobenhausen (DE)**
• **HUBER, Thomas**
 **83301 Traunreut (DE)**

(56) Entgegenhaltungen:
EP-A1- 3 048 426      EP-A1- 3 048 426
EP-A2- 2 741 058      EP-A2- 2 741 058
WO-A2-2008/043614      WO-A2-2008/043614

## Beschreibung

### GEBIET DER TECHNIK

Die vorliegende Erfindung betrifft eine Positionsmessanordnung. Darüber ist die hochgenaue Bestimmung der Relativposition zweier zueinander beweglicher Objekte möglich.

### STAND DER TECHNIK

Eine gattungsgemäße Positionsmessanordnung ist etwa aus der EP 2 679 962 A1 der Anmelderin bekannt. Diese dient zur Bestimmung der Relativposition zweier Objekte, die entlang mindestens eines ersten Freiheitsgrads in Form einer ersten translatorischen Richtung zueinander beweglich angeordnet sind. Hierbei ist einerseits mindestens eine Maßverkörperung vorgesehen, die mit einem der beiden Objekte verbunden ist und mindestens eine Messteilung aufweist. Andererseits sind mindestens zwei Abtasteinheiten mit dem anderen der beiden Objekte verbunden und in einem bestimmten Abtastabstand beabstandet von der Maßverkörperung angeordnet. Die Abtasteinheiten umfassen jeweils optische Abtastelemente, die zur Ausbildung eines Abtaststrahlengangs dienen, um die Messteilung optisch abzutasten und darüber positionsabhängige Abtastsignale zu erzeugen.

Mit Hilfe' einer derartigen Positionsmessanordnung kann beispielsweise in einer Halbleiter-Fertigungseinrichtung die Position eines beweglich angeordneten Präzisionstisches gegenüber einem demgegenüber stationären Maschinenrahmen hochgenau in ein oder mehreren räumlichen Freiheitsgraden bestimmt werden. Der Präzisionstisch einerseits und der Maschinenrahmen andererseits fungieren demnach hier als die beiden zueinander beweglichen Objekte der Positionsmessanordnung.

Im normalen hochgenauen Arbeitsbetrieb arbeiten die vorgesehenen Abtasteinheiten üblicherweise innerhalb des jeweils spezifizierten Arbeitsbereiches bezüglich der räumlichen Anordnung von Abtasteinheit und Maßverkörperung, beispielsweise also innerhalb des spezifizierten Arbeitsbereichs für den Abtastabstand. Neben dem hochgenauen Arbeitsbetrieb können jedoch noch weitere Betriebsmodi der jeweiligen Halbleiter-Fertigungseinrichtung vorgesehen sein, in denen ein deutlich vergrößerter Abtastabstand zwischen der Maßverkörperung und den Abtasteinheiten erforderlich ist und bei dem kein korrekter Betrieb der Abtasteinheiten und damit auch keine korrekte Erfassung der Position des Präzisionstisches über die Positionsmessanordnung mehr gewährleistet ist. Hierbei kann es sich z.B. um einen Einrichtbetrieb handeln, in dem das zu prozessierende Werkstück in Form eines Halbleiter-Wafers gewechselt wird.

Die EP 2 741 058 A2 offenbart z.B. in Figur 12 eine Positionsmessanordnung mit einer einer zweiteilig ausgebildeten Maßverkörperung, die von zwei Abtasteinheiten abgetastet wird. Es werden Maßnahmen vorgeschlagen, die sicherstellen, dass auch beim Überfahren des Bereichs zwischen verschiedenen Maßverkörperungen die Erzeugung von Positionsinformationen gewährleistet bleibt.

### ZUSAMMENFASSUNG DER ERFINDUNG

Der vorliegenden Erfindung liegt die Aufgabe zugrunde, eine Positionsmessanordnung anzugeben, um auch im Fall des Betriebs außerhalb vorgegebener Arbeitsbereiche bezüglich der räumlichen Anordnung von Abtasteinheit und Maßverkörperung eine korrekte Positionsbestimmung aufrecht zu erhalten.

Diese Aufgabe wird erfindungsgemäß durch eine Positionsmessanordnung mit den Merkmalen des Anspruchs 1 gelöst.

Vorteilhafte Ausführungen der erfindungsgemäßen Positionsmessanordnung ergeben sich aus den Maßnahmen, die in den abhängigen Ansprüchen aufgeführt sind.

Die erfindungsgemäße Positionsmessanordnung zur Bestimmung der Relativposition zweier Objekte, die entlang mindestens zweier Freiheitsgrade zueinander beweglich angeordnet sind, umfasst

- mindestens eine Maßverkörperung, die mit einem der beiden Objekte verbunden ist und eine erste Messteilung und mindestens eine zweite Messteilung aufweist sowie

- mindestens zwei Abtasteinheiten, die mit dem anderen der beiden Objekte verbunden und entlang der Erstreckungsrichtung der Maßverkörperung beabstandet voneinander angeordnet sind, wobei die Abtasteinheiten jeweils optische Abtastelemente umfassen, die zur Ausbildung eines Abtaststrahlengangs dienen, um die Messteilung optisch abzutasten und darüber positionsabhängige Abtastsignale zu erzeugen, Die erste Messteilung sowie die zweite Messteilung sind auf unterschiedliche Arbeitsbereiche bezüglich der räumlichen Anordnung von Abtasteinheit und Maßverkörperung abgestimmt, in denen die Abtasteinheiten positionsabhängige Abtastsignale erzeugen können. Dabei ist die zweite Messteilung

- auf einem gegenüber der ersten Messteilung erhöhten oder erniedrigten Bereich der Maßverkörperung angeordnet oder

- gegenüber der ersten Messteilung verkippt angeordnet.

Hierbei ist möglich, dass die zweite Messteilung

- entweder einen Abtastabstand zu den Abtasteinheiten aufweist, der sich vom Abstand zwischen der ersten Messteilung und den Abtasteinheiten unterscheidet oder

- eine winkelmäßige Orientierung aufweist, die sich von der Orientierung der ersten Messteilung bezüglich der Abtasteinheiten unterscheidet.

Vorzugsweise ist die zweite Messteilung derart angeordnet und/oder ausgebildet, dass sich die Arbeitsbereiche mindestens zweier Abtasteinheiten, die jeweils eine der beiden Messteilungen abtasten, in einem Übergabebereich überlappen.

Desweiteren ist es möglich, dass die zweite Messteilung aus mehreren, unterschiedlich angeordneten und/oder unterschiedlich ausgebildeten Teil-Messteilungen besteht.

Mit Vorteil ist ferner vorgesehen, dass die Anzahl von Abtasteinheiten die Anzahl der messtechnisch zu erfassenden Bewegungsfreiheitsgrade der beiden beweglichen Objekte übersteigt.

Desweiteren kann die zweite Messteilung aus mehreren unterschiedlich angeordneten und/oder unterschiedlich ausgebildeten Teil-Messteilungen bestehen, die in die Abtaststrahlengänge einzelner Abtasteinheiten einbringbar sind.

In einer möglichen Ausführungsform kann desweiteren vorgesehen sein, dass der Abtaststrahlengang jeder Abtasteinheit derart ausgebildet ist, dass darüber gleichzeitig die Erzeugung positionsabhängiger Abtastsignale entlang der Abstandsrichtung sowie entlang mindestens einer weiteren Richtung, erfolgt.

Mit Vorteil erfolgt eine Veränderung des Arbeitsbereichs bezüglich der räumlichen Anordnung von Abtasteinheit und Maßverkörperung in Form einer Verschiebung des Arbeitsbereichs.

Über die erfindungsgemäße Lösung kann nunmehr auch für den Fall eine korrekte Positionsbestimmung gewährleistet werden, wenn die Positionsmessanordnung in einem Arbeitsbereich bezüglich der räumlichen Anordnung von Abtasteinheit und Maßverkörperung betrieben wird, der ansonsten keine korrekte Positionsbestimmung ermöglichen würde,

Ein weiterer Vorteil der Erfindung besteht darin, dass die Information über die Nullpunkte der Positionszähler der inkremental arbeitenden Abtasteinheiten auch im' erweiterten Arbeitsbereich nicht verloren geht. Die aus den Positionszählern berechneten bzw. abgeleiteten Positionen der Objekte bleiben durchgängig reproduzierbar.

Neben einem erweiterten Arbeitsbereich des Abtastabstands zwischen Maßverkörperung und Abtasteinheiten können erfindungsgemäß auch erweiterte Arbeitsbereiche bezüglich der winkelmäßigen Orientierung von Maßverkörperung und Abtasteinheiten um verschiedene Achsen realisiert werden, d.h. bezüglich Verkippungen von Maßverkörperung und Abtasteinheiten um verschiedene Achse.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1a - 1c   je eine stark schematisierte Darstellung eines ersten Ausführungsbeispiels der erfindungsgemäßen Positionsmessanordnung in unterschiedlichen Betriebsmodi;

Figur 2   eine schematische Darstellung mit verschiedenen relevanten geometrischen Größen zur Erläuterung eines Verfahrens zum Betrieb der erfindungsgemäßen Vorrichtung;

Figur 3a - 3c   je eine stark schematisierte Darstellung eines zweiten Ausführungsbeispiels der erfindungsgemäßen Positionsmessanordnung in unterschiedlichen Betriebsmodi;

Figur 4   eine stark schematisierte Darstellung zu einem dritten Ausführungsbeispiel der erfindungsgemäßen Positionsmessanordnung;

Figur 5a - 5d   je eine stark schematisierte Darstellung eines vierten Ausführungsbeispiels der erfindungsgemäßen Positionsmessanordnung in unterschiedlichen Betriebsmodi;

Figur 6a - 6d   je eine stark schematisierte Darstellung eines fünften Ausführungsbeispiels der erfindungsgemäßen Positionsmessanordnung in unterschiedlichen Betriebsmodi.

## BESCHREIBUNG DER AUSFÜHRUNGSFORMEN

Erstes Ausführungsbeispiel

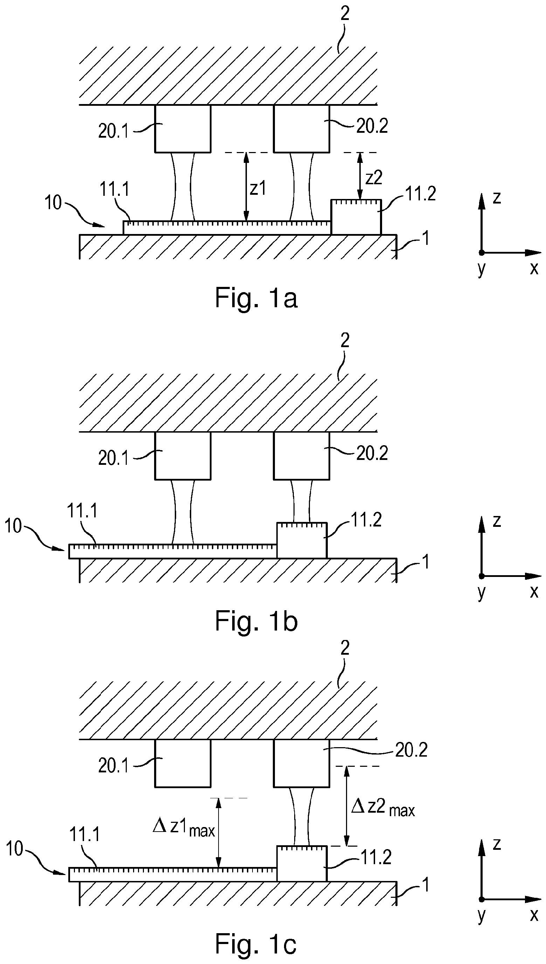

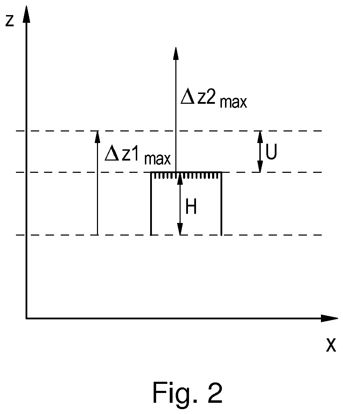

Ein erstes, stark vereinfachtes Ausführungsbeispiel der erfindungsgemäßen Positionsmessanordnung sowie eines Verfahrens zum Betrieb derselbigen wird nachfolgend anhand der Figuren 1a - 1c und 2 erläutert. Da zunächst die grundlegenden Prinzipien der vorliegenden Erfindung beschrieben werden sollen, ist in diesem Ausführungsbeispiel eine Positionsmessanordnung mit lediglich zwei Abtasteinheiten zur Erfassung eines räumlichen Translations-Freiheitsgrads vorgesehen. In den nachfolgenden Ausführungsbeispielen wird das erläuterte Grundprinzip u. a. auf Varianten mit mehr Abtasteinheiten und mehr erfassbaren räumlichen Freiheitsgraden erweitert.

Das in den Figuren 1a - 1c schematisiert dargestellte erste Ausführungsbeispiel der erfindungsgemäßen Positionsmessanordnung dient zur messtechnischen Bestimmung der Relativposition der beiden Objekte 1 und 2, die mindestens entlang zweier Freiheitsgrade in Form von Translationsbewegungen entlang zweier Richtungen zueinander beweglich angeordnet sind; die beiden Objekte 1, 2 sind demzufolge in mindestens zwei translatorischen Bewegungsfreiheitsgraden zueinander beweglich. Eine der beiden Richtungen, vorliegend die Richtung z, ist hierbei dadurch ausgezeichnet, dass entlang dieser Richtung in diesem Beispiel der Arbeitsbereich der Positionsmessanordnung erweitert werden soll. Die andere Richtung, hier die Richtung x, ist dadurch ausgezeichnet, dass sie sich entlang einer Maßverkörperung 10 erstreckt, die mit dem ersten Objekt 1 verbunden ist. Bei den Objekten 1, 2 kann es sich etwa um zueinander bewegliche Maschinenkomponenten handeln, z.B. um einen beweglichen Tisch einer Halbleiter-Fertigungseinrichtung und einen demgegenüber stationären Maschinenrahmen. Die von der Positionsmessanordnung erzeugten positionsabhängigen Abtastsignale werden einer - nicht in den Figuren dargestellten - Maschinensteuerung übergeben, die damit die Positionierung des Tisches steuert.

Die erfindungsgemäße Positionsmessanordnung umfasst einerseits eine Maßverkörperung 10, die mit einem ersten Objekt 1 verbunden ist und mindestens eine erste Messteilung 11.1 sowie eine zweite Messteilung 11.2 umfasst. Beide Messteilungen 11.1, 11.2 sind entlang der x-Richtung unmittelbar aufeinanderfolgend bzw. benachbart angeordnet. Die beiden Messteilungen 11.1, 11.2 können beispielsweise jeweils als bekannte inkrementale Auflicht-Messteilungen ausgebildet sein, die aus entlang der Richtung x periodisch angeordneten Teilungsbereichen unterschiedlicher Reflektivität bestehen und jeweils auf der Oberseite eines geeigneten Trägerkörpers angeordnet sind. Beide Messteilungen 11.1, 11.2 besitzen vorliegend die gleiche Periodizität, was jedoch im Rahmen der Erfindung nicht zwingend erforderlich ist. Die zweite Messteilung 11.2 unterscheidet sich im vorliegenden Ausführungsbeispiel von der ersten Messteilung 11.1 in Bezug auf deren Anordnung in der erfindungsgemäßen Positionsmessanordnung; hierauf wird im Folgenden noch näher eingegangen.

Anderseits umfasst die Positionsmessanordnung vorliegend zwei mit dem anderen Objekt 2 verbundene Abtasteinheiten 20.1, 20.2 zur optischen Abtastung der Messteilungen 11.1, 11.2; in alternativen Ausführungsbeispielen können selbstverständlich auch mehr als zwei Abtasteinheiten vorgesehen werden. Die beiden Abtasteinheiten 20.1, 20.2 sind entlang der Richtung x beabstandet voneinander angeordnet; entlang der vertikalen Richtung z sind die beiden Abtasteinheiten 20.1, 20.2 gemäß Figur 1a im Abtastabstand Z1 bzw. Z2 zur ersten Messteilung 11.1 bzw. zweiten Messteilung 11.2 angeordnet. Beide Abtasteinheiten 20.1, 20.2 sind grundsätzlich identisch ausgebildet und umfassen optische Abtastelemente, über die jeweils ein Abtaststrahlengang ausgebildet wird, um die Messteilungen 11.1, 11.2 optisch abzutasten und darüber positionsabhängige Signale in Form periodischer Inkrementalsignale bezüglich einer Relativbewegung der beiden Objekte 1, 2 zu erzeugen. Als - nicht in den Figuren dargestellte - optische Abtastelemente fungieren beispielsweise eine Lichtquelle, Optikelemente wie Linsen, Gitter und/oder Reflektoren sowie eine geeignete optoelektronische Detektoreinrichtung. Die konkrete Ausbildung der Abtasteinheiten 20.1, 20.2 sowie des entsprechenden optischen Abtastprinzips sind für die vorliegende Erfindung nicht wesentlich. Es können grundsätzlich verschiedene bekannte optische Abtastprinzipien mit unterschiedlich angeordneten Abtastelementen zur Erzeugung von Abtastsignalen in Form periodischer Inkrementalsignale genutzt werden. Möglich wäre etwa der Einsatz einer optischen Abtastung, wie sie z.B. in der EP 1 762 828 A2 der Anmelderin offenbart ist.

Von der jeweils gewählten optischen Abtastung hängt dann der Arbeitsbereich bezüglich der räumlichen Anordnung von Maßverkörperung 10 und Abtasteinheiten 20.1, 20.2 ab, in dem die die Positionsmessanordnung korrekte Positionsinformationen liefert. So ist etwa dadurch ein bestimmter Arbeitsbereich des Abtastabstands zwischen der Maßverkörperung 10 und den Abtasteinheiten 20.1, 20.2 vorgegeben, in dem die Positionsmessanordnung korrekt arbeitet. Üblicherweise gibt es einen minimalen zulässigen Abtastabstand sowie einen maximalen zulässigen Arbeitsabstand; der zulässige Arbeitsbereich des Abtastabstands liegt zwischen diesen beiden Grenz-Abtastabständen. Analog hierzu gibt es auch bestimmte Arbeitsbereiche bezüglich zulässiger Verkippungen der Abtasteinheiten 20.1, 20.2 gegenüber der Maßverkörperung 10. Typischerweise werden hierbei Arbeitsbereiche für zulässige Verkippungen vorgegeben. Hierbei kann es sich beispielsweise um Verkippungen um eine Achse z senkrecht auf die Maßverkörperungsebene (Moire-Kippung) bzw. um eine in der Maßverkörperungsebene liegende Achse handeln etc.. Wird die zulässige Verkippung um eine derartige Achse überschritten, so führt dies zu Fehlmessungen oder sogar zu einem kompletten Ausfall der Positionsmessanordnung.

Wie bereits oben erwähnt, unterscheidet sich die zweite Messteilung 11.2 von der ersten Messteilung 11.1 in Bezug auf deren räumlicher Anordnung in der Positionsmessanordnung. So weist die zweite Messteilung 11.2 im ersten Ausführungsbeispiel einen Abtastabstand Z2 zu den Abtasteinheiten 20.1, 20.2 entlang der angegebenen z-Richtung auf, der sich wie in Figur 1a ersichtlich vom entsprechenden Abtastabstand Z1. zwischen der ersten Messteilung 11.1 und den beiden Abtasteinheiten 20.1, 20.2 unterscheidet. Im dargestellten Beispiel ist Z2 kleiner als Z1, d.h. es gilt Z2 < Z1. Hierzu ist die zweite Messteilung 11.2 auf einem Bereich des Trägerkörpers der Maßverkörperung 10 angeordnet, der gegenüber dem Bereich des Trägerkörpers mit der ersten Messteilung 11.1 erhöht ist. Die zweite Messteilung 11.2 ist demzufolge als gegenüber der ersten Messteilung 11.1 erhöhter Bereich auf der Maßverkörperung 10 ausgebildet. Aufgrund der unterschiedlichen räumlichen Anordnung der zweiten Messteilung 11.2 mit einem gegenüber der ersten Messteilung geringeren Abtastabstand Z2 zu den beiden Abtasteinheiten 10.1, 20.2 wird bei der Abtastung dieser Messteilung 11.2 ein veränderter Arbeitsbereich bezüglich der räumlichen Anordnung von Abtasteinheit 20.1, 20.2 und Maßverkörperung 10 gegenüber der Abtastung der ersten Messteilung 11.1 bereitgestellt. Vorliegend kann durch Abtasten der beiden Messteilungen 11.1, 11.2 der Arbeitsbereich des Abtastabstands zwischen der Maßverkörperung 10 und den Abtasteinheiten 20.1, 20.2 definiert verändert werden, wie dies anhand der nachfolgenden Beschreibung eines Verfahrens zum Betrieb der erfindungsgemäßen Vorrichtung erläutert sei; im Zusammenhang mit der Erläuterung des Verfahrens sei ergänzend auch auf die schematische Dastellung in Figur 2 verwiesen,

Hierbei soll in einem Einrichtbetrieb das Objekt 1 zeitweise in einen Abstand zu Objekt 2 gebracht werden, der den eigentlich zulässigen Arbeitsbereich des Abtastabstands der Abtasteinheiten 20.1, 20.2 übersteigt und ohne Zusatzmaßnahmen zu einem Ausfall der Positionsmessung führen würde.

Üblicherweise ist für eine bestimmte optische Abtastung ein zulässiger Arbeitsbereich des Abtastabstands zwischen Abtasteinheit 20.1, 20.2 und Maßverkörperung 10 spezifiziert, in dem eine korrekte bzw. zuverlässige Erzeugung von positionsabhängigen Abtastsignalen bzw. periodischen Inkrementalsignalen gewährleistet ist. Insbesondere gibt es wie vorher bereits erwähnt jeweils einen bestimmten maximal zulässigen Abtastabstand $\Delta Z1_{max}$ bzw. $\Delta Z2_{max}$ für die beiden Abtasteinheiten 20.1, 20.2, wie dies in Figur 2 angedeutet ist. Im vorliegenden Beispiel sind die beiden maximal zulässigen Abtastabstände $\Delta Z1_{max}$ bzw. $\Delta Z2_{max}$ betragsmäßig identisch, aber gemäß Figur 2 entlang der z-Richtung wegen der um den Betrag H erhöhten Anordnung der zweiten Messteilung 11.2 zueinander verschoben. Werden nach einem Betrieb mit unzulässig großem Abtastabstand anschließend die Abtasteinheiten 20.1, 20.2 wieder in einem zulässigen Abtastabstand betrieben, so sollten die Zähler-Nullpunkte der inkrementalen Positionsmessungen wieder denjenigen aus dem Ausgangszustand entsprechen. Um dies sicherzustellen, wird wie nachfolgend beschrieben der Arbeitsbereich des Abtastabstands einer Abtasteinheit 20.1, 20.2 zeitweise verändert bzw. verschoben und die Positionsmessung geeignet zwischen den beiden Abtasteinheiten 20.2, 20.2 umgeschaltet.

Im Ausgangszustand der erfolgenden Positionsbestimmung mit Hilfe der erfindungsgemäßen Positionsmessanordnung, dargestellt in Figur 1a, wird über die beiden Abtasteinheiten 20.1, 20.2 zunächst die identische Information bezüglich der Relativposition der beiden Objekte 1, 2 erzeugt.

Das Objekt 2 bzw. die entsprechende Maschinenkomponente wird dann - wie in Figur 1b gezeigt - derart entlang der Richtung x verschoben, dass die zweite Messteilung 11.2 sich im Abtaststrahlengang der zweiten Abtasteinheit 20.2 befindet. Während des Verschiebens muss die Positionsmessung mit der zweiten Abtasteinheit 20.2 kurz unterbrochen werden, so dass der Zähler-Nullpunkt der Positionsmessung über die zweite Abtasteinheit 20.2 ab diesem Zeitpunkt nicht mehr bekannt ist.

Im Fall der Abtastung der zweiten, etwas erhöht angeordneten Messteilung 11.2 liegt in diesem Zustand ein Abtastabstand Z2 vor, der kleiner als der Abtastabstand Z1 bei der Abtastung der ersten Messteilung 11.1 durch die erste Abtasteinheit 20.1 ist.

Im Gefolge wird dann der Abstand zwischen den Objekten 1, 2 und damit der Abtastabstand zwischen den Messteilungen 11.1, 11.2 und den beiden Abtasteinheiten 20.1, 20.2 weiter vergrößert, um beispielsweise wie eingangs erläutert die entsprechende Maschine in einem Einrichtbetrieb zu betreiben. Dabei wird ein Bereich des Abtastabstands durchfahren, der nachfolgend als Übergabebereich U des Abtastabstands-Arbeitsbereichs bezeichnet wird. Im Übergabebereich U sind beide Abtasteinheiten 20.1, 20.2 funktionsfähig und erzeugen positionsabhängige Abtastsignale, nämlich die erste Abtasteinheit 20.1 durch Abtasten der ersten Messteilung 11.1 und die zweite Abtasteinheit 20.2 durch Abtasten der zweiten Messteilung 11.2. Im Übergabebereich U wird die zweite Abtasteinheit 20.2 wieder initialisiert bzw. referenziert, indem der Zähler-Nullpunkt der zweiten Abtasteinheit 20.2 neu ermittelt wird, und zwar so, dass anschließend beide Abtasteinheiten 20.1, 20.2 wieder konsistent die korrekten Positionsinformationen bezüglich der Position der beiden Objekte 1, 2 liefern. Die Positionsinformationen in Form von Positions-Zählerwerten der jeweiligen Abtasteinheiten 20.1, 20.2 resultieren dann in bekannter Art und Weise aus der Verrechnung der periodischen Inkrementalsignale mit dem jeweiligen Zähler-Nullpunkt.

Ab einem gewissen Abstand zwischen den Objekten 1, 2, dargestellt in Figur 1c, fällt dann die erste Abtasteinheit 20.1 wegen Überschreitung des zulässigen Arbeitsbereichs des Abtastabstands Z1 aus, d.h. es wird der maximal zulässige Abtastabstand $\Delta Z1_{max}$ zwischen der ersten Messteilung 11.1 und der ersten Abtasteinheit 20.1 überschritten. Trotzdem kann über die erfindungsgemäße Positionsmessanordnung weiterhin eine gültige Positionsinformation bestimmt werden, nämlich durch die zweite Abtasteinheit 20.2, die die zweite Messteilung 11.2 in einem Abtastabstand Z2 abtastet, der nach wie vor kleiner als der für diese Abtasteinheit 20.2 maximal zulässige Abtastabstand $\Delta Z2_{max}$ ist. Dies ist gewährleistet, da aufgrund der erhöhten Anordnung der zweiten Messteilung 11.2 quasi ein vergrößerter Arbeitsbereich des Abtastabstands Z2 für die zweite Abtasteinheit 20.1 resultiert.

Wenn der Abstand zwischen den Objekten 1, 2 bzw. der Abtastabstand zwischen den Messteilungen 11.1, 11.2 und den Abtasteinheiten 20.1, 20.2 schließlich wieder verringert werden soll, da z.B. der Einrichtbetrieb abgeschlossen ist, geht man umgekehrt vor wie vorstehend beschrieben. Dabei wird im Übergabebereich U des Abtastabstands-Arbeitsbereichs die Positionsinformation der zweiten Abtasteinheit 20.2 verwendet, um die erste Abtasteinheit 20.1 zu initialisieren bzw. den Zähler-Nullpunkt der ersten Abtasteinheit 20.1 neu zu initialisieren.

Abschließend wird der Zähler-Nullpunkt der zweiten Abtasteinheit 20.2 dann so gesetzt, dass beide Abtasteinheiten 20.1, 20.2 die gleiche Positionsinformation liefern. Am Ende des gesamten Prozesses entsprechen die Zähler-Nullpunkte beider Abtasteinheiten 20.1, 20.2 dann wieder den Zähler-Nullpunkten aus dem Ausgangszustand.

Im vorhergehenden Beispiel wurde anhand der Figuren 1a - 1c der konkrete Fall erläutert, dass im Einrichtbetrieb ein Abtastabstand resultiert, der größer als der eigentlich zulässige Abtastabstand ist. Selbstverständlich kann durch eine geeignete Anordnung der zweiten Messteilung auch dem Problem erfindungsgemäß begegnet werden, dass ggf. ein Abtastabstand erforderlich ist, der kleiner als der minimal zulässige Abtastabstand ist. Hierzu wäre dann die zweite Messteilung gegenüber der ersten Messteilung erniedrigt anzuordnen, d.h. in einem Abtastabstand Z2, der größer ist als der Abtastabstand Z1 zwischen der ersten Messteilung und der ersten Abtasteinheit usw..

Wie bereits erwähnt, ist in schematischer Form die resultierende Wirkung der erhöhten zweiten Messteilung 11.2 in Figur 2 skizziert. Mit $\Delta Z1_{max}$, $\Delta Z2_{max}$ werden hierbei die maximalen Abtastabstands-Arbeitsbereiche der ersten und zweiten Abtasteinheit 20.1, 20.2 bezeichnet, H gibt den Betrag der Höhe der zweiten Messteilung 11.2 gegenüber der ersten Messteilung 11.1 an und U bezeichnet den Übergabebereich, in dem beide Abtasteinheiten 20.1, 20.2 korrekte Positionsinformationen liefern.

Für die verschiedenen Größen gelten hierbei nachfolgende Beziehungen:

$$\Delta Z1_{max}= \ \Delta Z2_{max}$$

$$U = \Delta Z1_{max} - H = \Delta Z2_{max} - H$$

Allgemein kann demzufolge davon gesprochen werden, dass über die vorliegende Erfindung mittels der Ausbildung und/oder Anordnung der zweiten Messteilung eine Veränderung des Arbeitsbereichs bewirkbar ist, der bezüglich der räumlichen Anordnung von Abtasteinheit und Maßverkörperung gegeben ist und in dem die Abtasteinheit positionsabhängige Signale erzeugen kann. Vorzugsweise besteht die Veränderung des Arbeitsbereichs hierbei in einer Verschiebung desselbigen.

Im ersten Ausführungsbeispiel wurde hierbei eine Möglichkeit erläutert, wie durch die erhöhte oder erniedrigte Anordnung der zweiten Messteilung der Arbeitsbereich des Abtastabstands definiert verändert bzw. verschoben werden kann. Die Anordnung und/oder Ausbildung der zweiten Messteilung werden dabei derart gewählt, dass sich die entsprechenden Arbeitsbereiche mindestens zweier Abtasteinheiten in einem Übergabebereich überlappen.

In den folgenden Ausführungsbeispielen werden alternative Varianten der zweiten Messteilung vorgeschlagen, über die Arbeitsbereiche hinsichtlich der zulässigen räumlichen Orientierung zwischen den Messteilungen und den Arbeitseinheiten verändert werden können, nämlich die Verkippungs-Arbeitsbereiche.

Zweites Ausführungsbeispiel

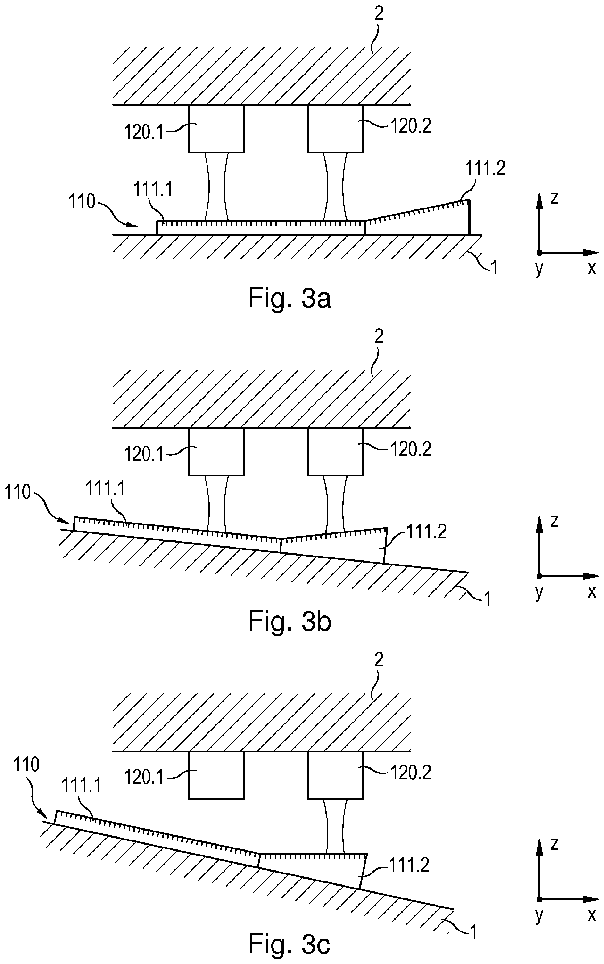

Ein zweites Ausführungsbeispiel der erfindungsgemäßen Vorrichtung sowie des zugehörigen Verfahrens zum Betrieb derselbigen wird nachfolgend anhand der schematischen Figuren 3a - 3c erläutert.

Der maßgebliche Unterschied zum ersten Ausführungsbeispiel besteht hierbei in der Ausbildung der zweiten Messteilung 111.2, welche nunmehr keilförmig bzw. verkippt gegenüber der ersten Messteilung 111.1 ausgebildet ist. Die zweite Messteilung 111.2 ist hierbei um eine Achse entlang der y-Richtung verkippt..

Während im ersten Ausführungsbeispiel über die erhöhte bzw. erniedrigte Anordnung der zweiten Messteilung 11.2 jeweils eine Veränderung des Abtastabstands-Arbeitsbereichs zwischen der Maßverkörperung 10 und den Abtasteinheiten 20.1, 20.2 möglich war, erlaubt die keilförmige bzw. verkippte Ausführung der zweiten Messteilung 111.2 nunmehr eine definierte Veränderung bzw. Verschiebung des Arbeitsbereichs der winkelmäßigen Orientierung zwischen der Maßverkörperung 110 und den Abtasteinheiten 120.1, 120.2.

Konkret bedeutet dies im vorliegenden zweiten Ausführungsbeispiel somit, dass über die erfindungsgemäßen Maßnahmen in Verbindung mit der zweiten Messteilung 111.2 der zulässige Verkippungsbereich zwischen der Maßverkörperung 110 und den Abtasteinheiten 120.1, 120.2 veränderbar und insbesondere erweiterbar ist. Dies betrifft den Verkippungsbereich um eine Achse in der Ebene der ersten oder zweiten Messteilung entlang der y-Richtung. Wie im ersten Ausführungsbeispiel sind wiederum zwei grundsätzlich identisch ausgebildete Abtasteinheiten 120.1, 120.2 vorgesehen, die in der Lage sind, über die optische Abtastung der Messteilungen 111.1, 111.2 die Relativposition zwischen den zwei Objekten 1, 2 zu bestimmen.

In der Ausgangslage, dargestellt in Figur 3a, tasten die beiden Abtasteinheiten 120.1, 120.2 jeweils die erste Messteilung 111.1 ab und liefern die identischen Positionsinformationen bzgl. der Relativposition der beiden Objekte 1, 2.

Gemäß Figur 3b ist sodann vorgesehen, die zweite, keilförmig ausgebildete bzw. verkippt angeordnete zweite Messteilung 111.2 in den Abtaststrahlengang der zweiten Abtasteinheit 120.2 einzubringen. Dabei wird die Positionsmessung mit dieser Abtasteinheit 120.2 zeitweise unterbrochen, womit auch der Zähler-Nullpunkt der über diese Abtasteinheit 120.2 erfolgenden Positionsmessung verloren geht bzw. nicht mehr bekannt ist. Durch die keilförmige zweite Messteilung 111.2 ändert sich der Arbeitsbereich der zweiten Abtasteinheit 120.2 in Bezug auf die zulässige winkelmäßige Verkippung der Maßverkörperung 110 gegenüber dieser Abtasteinheit 120.2 um die vorstehend erwähnte Verkippungsachse, in dem diese Abtasteinheit 120.2 arbeiten kann und korrekte positionsabhängige Abtastsignale erzeugt.

Wird dann das Objekt 2 relativ zum Objekt 1 um die Verkippungsachse verkippt, so resultiert im Gefolge ein Verkippungs-Arbeitsbereich, in dem beide Abtasteinheiten 120.1, 120.2 ordnungsgemäß arbeiten und jeweils korrekte positionsabhängige Abtastsignale erzeugen; dieser Zustand ist in Figur 3b dargestellt. Im entsprechenden Übergabebereich der Arbeitsbereiche wird dann der Zähler-Nullpunkt der zweiten Abtasteinheit 120.2 neu ermittelt, so dass anschließend beide Abtasteinheiten 120.1, 120.2 die Relativ-Position der beiden zueinander beweglichen Objekte 1, 2 korrekt messtechnisch erfassen können.

Ab einem gewissen Verkippwinkel zwischen den beiden Objekten 1, 2 fällt, wie in Figur 3c gezeigt, die Abtasteinheit 120.1 aus und lediglich die Abtasteinheit 120.2, die die zweite Messteilung 111.2 abtastet, liefert weiterhin korrekte gültige Positionsinformationen; dies ist deshalb gewährleistet, da diese Abtasteinheit 120.2 einen gegenüber der ersten Abtasteinheit 120.1 veränderten Verkippwinkel-Arbeitsbereich besitzt.

Durchläuft man anschließend diese Verfahrens-Sequenz in umgekehrter Reihenfolge, so endet man wieder in der Ausgangssituation gemäß Figur 3a, in der beide Abtasteinheiten 120.1, 120.2 im hochgenauen Betrieb arbeiten und entsprechende positionsabhängige Abtastsignale erzeugen.

Drittes Ausführungsbeispiel

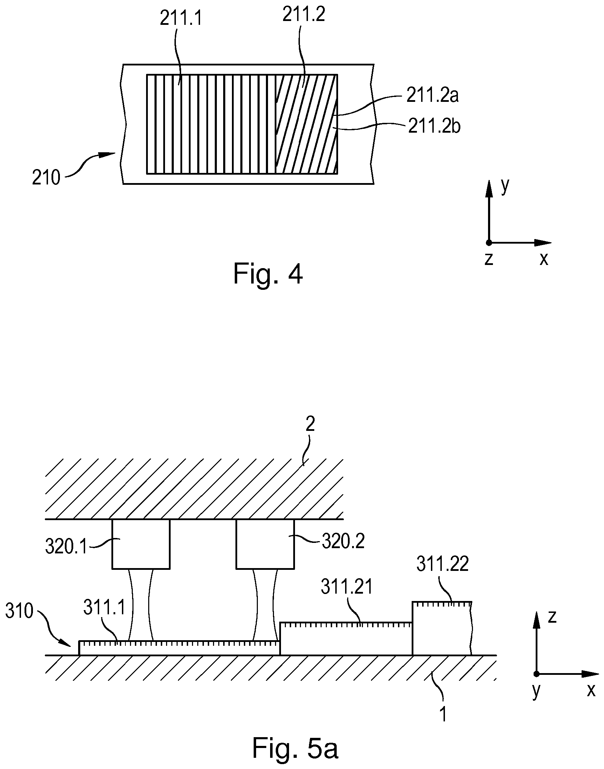

Ein drittes Ausführungsbeispiel der erfindungsgemäßen Positionsmessanordnung wird anschließend anhand der schematischen Figur 4 erläutert. Diese Figur zeigt eine Draufsicht auf die Maßverkörperung 210 dieses Ausführungsbeispiels mit den beiden Messteilungen 211.1, 211.2. Im folgenden wird lediglich auf die maßgeblichen Unterschiede zu den vorherigen Beispielen eingegangen.

Unterschiedlich zu den vorangegangenen Ausführungsbeispielen ist wiederum die zweite Messteilung 211.2 ausgebildet. Diese besitzt Teilungsbereiche 211.2a, 211.2b, die entlang der Richtung x periodisch aufeinanderfolgend angeordnet sind. Die Teilungsbereiche 211.2a, 211.2b der zweiten Messteilung 211.2 sind jedoch nicht wie die Teilungsbereiche der ersten Messteilung 211.1 senkrecht zur Richtung x bzw. parallel zur hierzu senkrechten Richtung y orientiert, sondern um einen bestimmten Winkel um eine entsprechende Achse verkippt bzw. verdreht angeordnet. Die entsprechende Achse ist hierbei nun entlang der z-Richtung orientiert, also senkrecht in Bezug auf die Messteilungsebene. In diesem Ausführungsbeispiel weist die zweite Messteilung 211.2 demnach wiederum eine Orientierung auf, die sich von der Orientierung der ersten Messteilung 211.1 bezüglich der Abtasteinheiten 20.1, 20.2 unterscheidet. Die zweite Messteilung 211.2 ist demzufolge gegenüber der ersten Messteilung 211.1 um eine Achse z verkippt bzw. verdreht angeordnet ist, die senkrecht zur Richtung x und senkrecht zur Längsachse y der Teilungsbereiche der ersten Messteilung 211.1 orientiert ist.

Mit Hilfe einer derart ausgebildeten zweiten Messteilung 211.2 lässt sich analog zu den bisher erläuterten Ausführungsbeispielen der Arbeitsbereich der Positionsmessanordnung bezüglich einer Verkippung der Abtasteinheiten und der Maßverkörperung um eine Achse z senkrecht zur Messteilungsebene vergrößern.

Viertes Ausführungsbeispiel

Ein viertes Ausführungsbeispiel der erfindungsgemäßen Vorrichtung sowie des zugehörigen Verfahrens zum Betrieb derselbigen wird nachfolgend anhand der schematischen Figuren 5a - 5d erläutert. Wiederum sei dabei nur auf die maßgeblichen Unterschiede zu den vorhergehenden Ausführungsbeispielen eingegangen.

So war in den vorangegangenen Beispielen jeweils lediglich eine einzige weitere bzw. zweite, geeignet ausgebildete bzw. angeordnete Messteilung neben der ersten Messteilung auf Seiten der Maßverkörperung vorgesehen. Im Rahmen der vorliegenden Erfindung ist es darüber hinaus jedoch auch möglich, neben der ersten Messteilung noch mehrere weitere Messteilungen auf der Maßverkörperung anzuordnen bzw. die zweite Messteilung mehrteilig auszubilden, um die gewünschte Erweiterung von Arbeitsbereichen der erfindungsgemäßen Positionsmessanordnung bzgl. der räumlichen Orientierung von Maßverkörperung und Abtasteinheiten zu ermöglichen. Im folgenden sei jeweils von einer mehrteiligen Ausbildung der zweiten Messteilung die Rede, die demnach mehrere Teil-Messteilungen umfasst. Dies ist als funktional völlig identisch zum Vorsehen von mehr als zwei Messteilungen anzusehen.

Eine wichtige Design-Größe stellt bei einer derart ausgebildeten zweiten Messteilung dabei die jeweilige Erstreckung bzw. Länge der Teil-Messteilungen entlang der Richtung x dar. So ist grundsätzlich erforderlich, dass die Länge einzelner Teil-Messteilungen der zweiten Messteilung mindestens dem Abstand zweier Abtasteinheiten entlang der Richtung x zuzüglich der Breite des Abtaststrahlengangs in dieser Richtung entspricht.

Eine mehrteilige Ausbildung der zweiten Messteilung kann hierbei in Verbindung mit jeder der drei vorstehend erläuterten Möglichkeiten zur Vergrößerung von Arbeitsbereichen vorgesehen werden. D.h. es können mehrteilige zweite Messteilungen zur Erweiterung des Abtastabstand-Arbeitsbereichs ebenso verwendet werden wie zur Erweiterung der Verkippungs-Arbeitsbereiche um die verschiedenen Achsen.

Im Ausführungsbeispiel, das anschließend anhand der Figuren 5a - 5d erläutert wird, ist eine Erweiterung des Abtastabstands-Arbeitsbereichs analog zum ersten Ausführungsbeispiel vorgesehen. In Bezug auf die zweite Messteilung bedeutet dies, dass die mehreren Teil-Messteilungen 311.21, 311.22 gegenüber der ersten Messteilung 311.1 jeweils unterschiedliche Abtastabstände zu den beiden Abtasteinheiten 320.1, 320.2 aufweisen.

Grundsätzlich ist bei einer derartigen Ausführung der zweiten Messteilung erforderlich, dass diese schrittweise in die Abtaststrahlengänge der vorliegend zwei Abtasteinheiten 320.1, 320.2 eingebracht werden. Auf diese Art und Weise kann wiederum der Abtastabstands-Arbeitsbereich entsprechend schrittweise vergrößert werden und in den Übergabebereichen der Arbeitsbereiche jeweils die Zähler-Nullpunkte übergeben werden. Ein derartiges Vorgehen wird anhand der Figuren 5a - 5d nachfolgend beschrieben.

Im Ausgangszustand, der in Figur 5a dargestellt ist, tasten die beiden Abtasteinheiten 320.1,320.2 wie in den vorhergehenden Beispielen jeweils die erste Messteilung 311.1 ab und liefern die identischen Positionsinformationen bzgl. der Relativposition der beiden Objekte 1, 2.

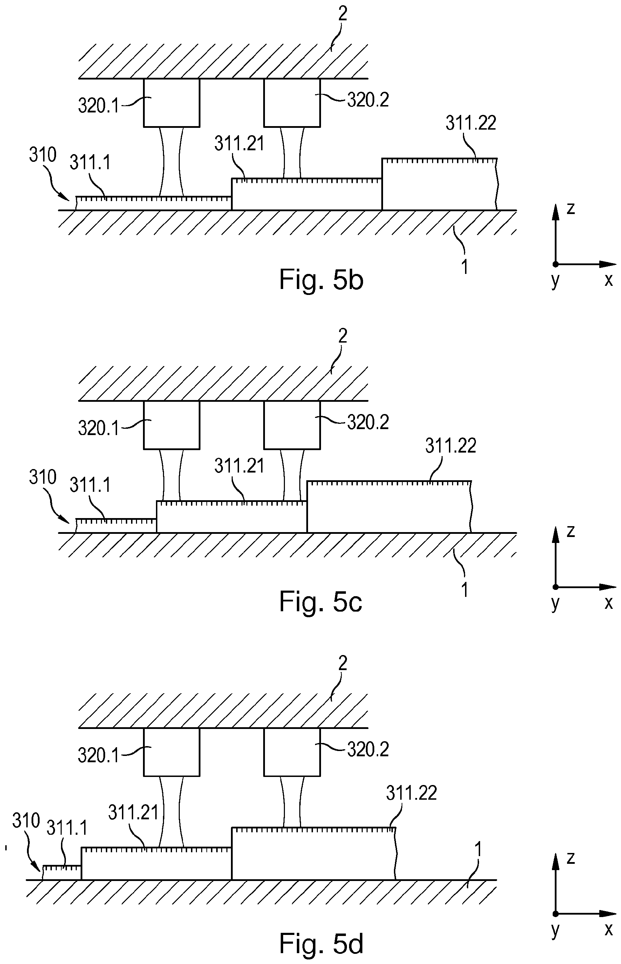

Gemäß Figur 5b wird durch eine erste Relativ-Verschiebung der beiden Objekte 1, 2 entlang der Richtung x die erste Teil-Messteilung 311.21 der mehrteilig ausgebildeten, zweiten Messteilung in den Abtaststrahlengang der zweiten Abtasteinheit 320.2 gebracht. Im Übergabebereich der Abtastabstands-Arbeitsbereiche beider korrekt funktionierender Abtasteinheiten 320.1, 320.2 werden sodann die Zähler-Nullpunkte beider Abtasteinheiten 320.1, 320.2 abgeglichen.

Im darauffolgenden Schritt, dargestellt in Figur 5c, wird über eine weitere Relativ-Verschiebung der beiden Objekte 1, 2 die zweite Teil-Messteilung 311.22 der zweiten Messteilung in den Abtaststrahlengang der ersten Abtasteinheit 320.1 geschoben. Die dabei von der zweiten Abtasteinheit 320.2 erzeugten Positionsinformationen bleiben weiterhin korrekt, womit dann im Anschluss der Zähler-Nullpunkt der ersten Abtasteinheit 320.1 initialisiert werden kann.

Die resultierende Situation entspricht nunmehr im Grund der Ausgangssituation gemäß Figur 5a, so dass im nächsten Schritt wie in Figur 5d angedeutet, dann über eine weitere Relativ-Verschiebung der Objekte 1, 2 entlang der Richtung x die zweite Teil-Messteilung 311.22 der zweiten Messteilung in den Abtaststrahlengang der zweiten Abtasteinheit 320.1 verschoben werden kann. Anschließend kann dann wieder die Initialisierung der zweiten Abtasteinheit 320.1 mit Hilfe der ersten Abtasteinheit 320.1 erfolgen usw..

Dieses schrittweise Vorgehen kann nunmehr mit ggf. vorgesehenen weiteren Teil-Messteilungen der zweiten Messteilung analog fortgesetzt werden, bis der Abtastabstands-Arbeitsbereich auf das erforderliche Maß vergrößert ist. Es lässt sich derart also schrittweise der Abtastabstand-Arbeitsbereich auf die benötigte Größenordnung vergrößern, ohne dass dabei Initialisierungsinformation bzw. Zähler-Nullpunkte der Abtasteinheiten 320.1, 320.2 verloren gehen.

Fünftes Ausführungsbeispiel

In den nachfolgenden Ausführungsbeispielen wird das der vorliegenden Erfindung zugrundeliegende Prinzip nunmehr auf Systeme bzw. Positionsmessanordnungen mit mehr als zwei Abtasteinheiten erweitert.

Um die vorliegende Erfindung in derartigen Anwendungen nutzen zu können, ist vorteilhaft, wenn mehr Abtasteinheiten zur Verfügung stehen, als für die zu bestimmenden Objekt-Freiheitsgrade grundsätzlich erforderlich wären. Die Anzahl von Abtasteinheiten übersteigt damit die Anzahl der messtechnisch zu erfassenden Bewegungsfreiheitsgrade der beiden beweglichen Objekte. Aus den vorgesehenen Abtasteinheiten kann dabei ein Satz von Abtasteinheiten willkürlich gewählt werden, solange über diesen Satz von Abtasteinheiten die relevanten Objekt-Freiheitsgrade messtechnisch erfassbar sind. Ein oder mehrere Abtasteinheiten, die nicht zu diesem Satz von Abtasteinheiten gehören, können dann zeitweise mit modifizierten zweiten Messteilungen betrieben werden. Hierbei können jeweils die verschiedenen vorstehend erläuterten Varianten zweiter Messteilungen vorgesehen werden, also zweite Messteilungen, die gegenüber den ersten Messteilungen erhöht oder erniedrigt bzw. um bestimmte Achsen verkippt sind. Insbesondere kann die zweite Messteilung hierbei aus mehreren unterschiedlich angeordneten und/oder ausgebildeten Teil-Messteilungen bestehen, die unabhängig voneinander in die Abtaststrahlengänge einzelner Abtasteinheiten einbringbar sind.

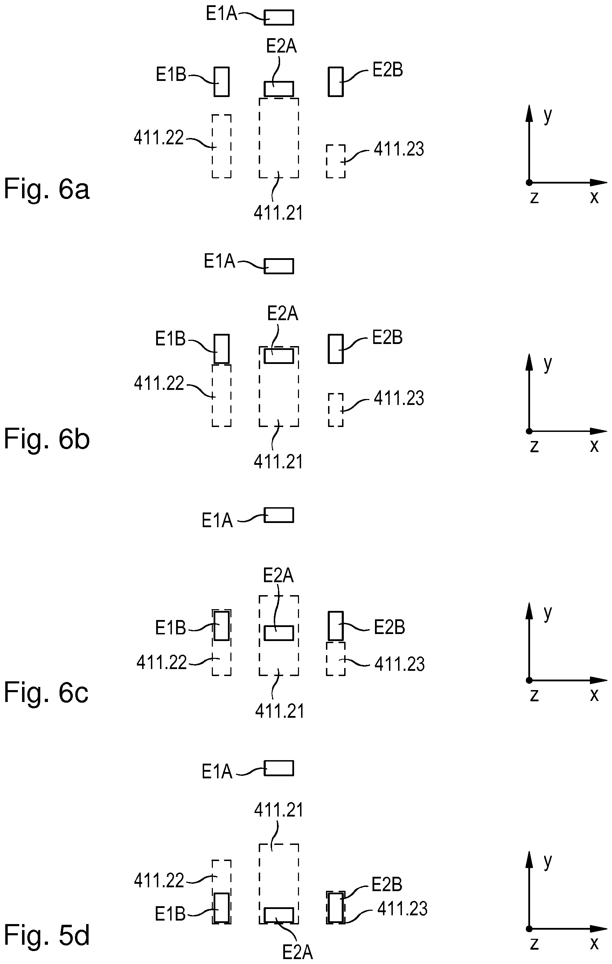

Figur 6a zeigt in stark schematisierter Form beispielhaft eine mögliche Anordnung mit jeweils mehreren Abtasteinheiten E1A, E1B, E2A, E2B in einem solchen System. Die vorliegend zu bestimmenden drei Objekt-Freiheitsgrade X, Y, RZ umfassen hierbei die relativen Verschiebungen der nicht dargestellten - relativbeweglichen Objekte entlang der angegebenen, orthogonalen Richtungen x und y sowie die relative Drehung der beiden Objekte um die Achse z, die senkrecht auf den beiden Richtungen x, y steht. Eine messtechnische Erfassung von Kippungen um die Achsen x, y sowie von Relativ-Verschiebungen entlang der Achse z ist in diesem Beispiel nicht vorgesehen.

Die Längsrichtungen der rechteckförmigen Abtasteinheiten E1A, E1B, E2A, E2B geben in den Figuren 6a - 6d jeweils die Richtungen der einzelnen Abtasteinheiten E1A, E1B, E2A, E2B an, die deren Messrichtung entspricht. Das heißt, über die zwei Abtasteinheiten E1A, E2A werden aus der optischen Abtastung geeignet ausgebildeter Messteilungen Relativbewegungen entlang der ersten Richtung x bestimmt bzw. messtechnisch erfasst, über die beiden Abtasteinheiten E1B, E2B erfolgt die Positionsbestimmung entlang der zweiten Richtung y.

Von den abgetasteten Messteilungen auf Seiten der Maßverkörperung sind in den Figuren 6a - 6d jeweils nur die zweiten Messteilungen 411.21, 411.22, 411.23 bzw. Teil-Messteilungen dargestellt, die zeitweise in die Abtaststrahlengänge der verschiedenen Abtasteinheiten E1A, E1B, E2A, E2B eingebracht werden und sich von den nicht-gezeigten ersten Messteilungen in Bezug auf deren Anordnung und/oder Ausbildung unterscheiden.

Analog zum Vorgehen in den obigen Ausführungsbeispielen werden auch in dieser Variante die zweiten Messteilungen 411.21, 411.22, 411,23 in die Abtaststrahlengänge entsprechender Abtasteinheiten eingebracht, bevor das bewegliche Objekt aus dem Arbeitsbereich der unmodifizierten Abtasteinheiten herausbewegt wird, und bevor das bewegliche Objekt eine Bewegung ausführt, die ohne die erfindungsgemäßen Maßnahmen mindestens eine Abtasteinheit aus ihrem Arbeitsbereich herausbewegen und somit zum Verlust der Positionsinformation sowie der Zählernullpunkte führen würde.. Ein derartiges Herausbewegen aus dem Arbeitsbereich kann etwa durch entsprechendes Verschieben entlang der z-Richtung oder aber durch Verkippen erfolgen. Das Einbringen der zweiten Messteilungen 411.21, 411.22, 411,23 erfolgt hierbei in mehreren Schritten, um derart zu gewährleisten, dass über einen Satz von Abtasteinheiten E1A, E1B, E2A, E2B die interessierenden Objekt-Freiheitsgrade bestimmbar sind.

Gemäß Figur 6b wird zunächst eine modifizierte zweite Messteilung 411.21 in den Abtaststrahlengang der Abtasteinheit E2A eingebracht. Über die anderen Abtasteinheiten E1A, E1B, E2B können währenddessen weiterhin die relevanten drei Objekt-Freiheitsgrade X, Y, RZ messtechnisch erfasst werden. Mit Hilfe dieser drei Abtasteinheiten kann dann der beim Einbringen der zweiten Messteilung 411.21 verloren gegangene Zähler-Nullpunkt der Abtasteinheit E2A im Übergabebereich bestimmt und diese Abtasteinheit E2A auf diese Art und Weise wieder referenziert werden.

Im nachfolgenden Schritt, dargestellt in Figur 6c, wird analog zum vorhergehenden Vorgehen eine modifizierte zweite Messteilung 411.22 in den Abtaststrahlengang der Abtasteinheit E1B eingebracht. Währenddessen können über die drei anderen Abtasteinheiten E1A, E2A, E2B die maßgeblichen drei Objekt-Freiheitsgrade X, Y, RZ messtechnisch erfasst und der Zähler-Nullpunkt der Abtasteinheit E1B bestimmt werden.

Ebenfalls analog zu den vorangegangenen Schritten wird daraufhin gemäß der Darstellung in Figur 6d die zweite Messteilung 423.23 in den Abtaststrahlengang der Abtasteinheit E2B eingebracht etc..

Da nunmehr in die Abtaststrahlengänge der drei Abtasteinheiten E1B, E2A und E2B die jeweils modifizierten zweiten Messteilungen 423.21, 423.21, 423.21 eingebracht sind, kann sodann der Arbeitsbereich über den ÜbergabeBereich hinaus verfahren oder verkippt werden; die Zähler-Nullpunkte bleiben dabei erhalten.

Sechstes Ausführungsbeispiel

Das anhand der Figuren 6a - 6d erläuterte fünfte Ausführungsbeispiel der erfindungsgemäßen Positionsmessanordnung lässt sich einfach in Richtung eines sechsten Ausführungsbeispiels abwandeln. So kann hierzu vorgesehen werden, dass der Abtaststrahlengang aller genutzten Abtasteinheiten derart ausgebildet wird, dass darüber gleichzeitig die Erzeugung positionsabhängiger Abtastsignale entlang der Richtung z erfolgt. Geeignet hierzu wäre etwa ein Abtaststrahlengang wie er z.B. aus der bereits vorstehend erwähnten EP 1 762 828 A2 der Anmelderin bekannt ist.

Das bedeutet etwa für die Abtasteinheiten E1A, E1B, E2A und E2B, dass darüber jeweils zwei Positions-Messwerte erzeugbar sind. Hierbei handelt es bei den Abtasteinheiten E1A und E2A um einen Positions-Messwert, der sensitiv auf Verschiebungen der Objekte entlang der Richtung x ist und einen weiteren Positions-Messwert, der sensitiv auf Verschiebungen der Objekte entlang der weiteren Richtung z ist. Die Abtasteinheit E1B, E2B sind analog hierzu sensitiv auf Bewegungen entlang der beiden Richtungen y und z.

In einer derartigen Ausführungsform der erfindungsgemäßen Positionsmessanordnung kann aus dem Satz von drei Abtasteinheiten E1A, E1B, und E2B die Relativpose der zueinander beweglichen Objekte in allen räumlichen Freiheitsgraden X, Y, Z, RX, RY, RZ ermittelt werden. Dies sind die Verschiebungsfreiheitsgrade X, Y, Z entlang der insgesamt drei linearen Richtungen x, y und z sowie die Rotationsfreiheitsgrade RX, RY, RZ um die drei Achsen x, y, z. Sofern die Zähler-Nullpunkte gültig sind, können diese wie vorstehend erläutert im Übergabebereich des Abtastabstands-Arbeitsbereichs zur Initialisierung der vierten Abtasteinheit E2A verwendet werden. In den nachfolgenden Schritten wird analog zum vorhergehenden Ausführungsbeispiel vorgegangen.

Neben den vorstehend konkret beschriebenen Ausführungsbeispielen existieren im Rahmen der vorliegenden Erfindung selbstverständlich noch weitere Ausgestaltungsmöglichkeiten.

So ist es etwa grundsätzlich möglich, die in den einzelnen Ausführungsbeispielen erläuterten Maßnahmen wahlweise zu kombinieren usw..

**Patentansprüche**

1. Positionsmessanordnung zur Bestimmung der Relativposition zweier Objekte (1, 2), die entlang mindestens zweier Freiheitsgrade zueinander beweglich angeordnet sind, mit

- mindestens einer Maßverkörperung (10; 110; 210; 310), die mit einem der beiden Objekte (1, 2) verbunden ist und eine erste Messteilung (11.1; 111.1; 211.1; 311.1) und mindestens eine zweite Messteilung (11.2; 111.2; 211.2; 311.2) aufweist,

- mindestens zwei Abtasteinheiten (20.1, 20.2; 120.1, 120.2; 320.1, 320.2; E1A, E2A, E1B, E2B), die mit dem anderen der beiden Objekte (1, 2) verbunden und entlang der Erstreckungsrichtung (x) der Maßverkörperung (10; 110; 210; 310) beabstandet voneinander angeordnet sind, wobei die Abtasteinheiten (20.1, 20.2; 120.1, 120.2; 320.1, 320.2; E1A, E2A, E1B, E2B) jeweils optische Abtastelemente umfassen, die zur Ausbildung eines Abtaststrahlengangs dienen, um die Messteilungen (11.1; 111.1; 211.1; 311.1; 11.2; 111.2; 211.2; 311.2) optisch abzutasten und darüber positionsabhängige Abtastsignale zu erzeugen,

- wobei die erste Messteilung (11.1; 111.1; 211.1; 311.1) sowie die zweite Messteilung (11.2; 111.2; 211.2; 311.2) auf unterschiedliche Arbeitsbereiche bezüglich der räumlichen Anordnung von Abtasteinheit (20.1, 20.2; 120.1, 120.2; 320.1, 320.2; E1A, E2A, E1B, E2B) und Maßverkörperung (10; 110; 210; 310) abgestimmt sind, in denen die Abtasteinheiten (20.1, 20.2; 120.1, 120.2; 320.1, 320.2; E1A, E2A, E1B, E2B) positionsabhängige Abtastsignale erzeugen können,

**dadurch gekennzeichnet,**
**dass** die zweite Messteilung (11.2; 111.2; 211.2; 311.2)

- auf einem gegenüber der ersten Messteilung (11.1; 111.1; 211.1; 311.1) erhöhten oder erniedrigten Bereich der Maßverkörperung (10; 110; 210; 310) angeordnet ist oder
- gegenüber der ersten Messteilung (11.1; 111.1; 211.1; 311.1) verkippt angeordnet ist.

2. Positionsmessanordnung nach Anspruch 1, **dadurch gekennzeichnet, dass** die zweite Messteilung (11.2; 111.2; 211.2; 311.2)

- entweder einen Abtastabstand zu den Abtasteinheiten (20.1, 20.2; 120.1, 120.2; 320.1, 320.2; E1A, E2A, E1B, E2B) aufweist, der sich vom Abstand zwischen der ersten Messteilung (11.1; 111.1; 211.1; 311.1) und den Abtasteinheiten (20.1, 20.2; 120.1, 120.2; 320.1, 320.2; E1A, E2A, E1B, E2B) unterscheidet oder

- eine winkelmäßige Orientierung aufweist, die sich von der Orientierung der ersten Messteilung (11.1; 111.1; 211.1; 311.1) bezüglich der Abtasteinheiten (20.1, 20.2; 120.1, 120.2; 320.1, 320.2; E1A, E2A, E1B, E2B) unterscheidet.

3. Positionsmessanordnung nach mindestens einem der vorhergehenden Ansprüche, **dadurch gekennzeichnet, dass** die zweite Messteilung (11.2; 111.2; 211.2; 311.2) derart angeordnet und/oder ausgebildet ist, dass sich die Arbeitsbereiche mindestens zweier Abtasteinheiten (20.1, 20.2; 120.1, 120.2; 320.1, 320.2; E1A, E2A, E1B, E2B), die jeweils eine der beiden Messteilungen (11.1; 111.1; 211.1; 311.1; 11.2; 111.2; 211.2; 311.2) abtasten, in einem Übergabebereich (U) überlappen.

4. Positionsmessanordnung nach mindestens einem der Ansprüche 1 - 3, **dadurch gekennzeichnet, dass** die zweite Messteilung (11.2; 111.2; 211.2; 311.2) aus mehreren, unterschiedlich angeordneten und/oder unterschiedlich ausgebildeten Teil-Messteilungen besteht.

5. Positionsmessanordnung nach mindestens einem der vorhergehenden Ansprüche, **gekennzeichnet durch** eine Anzahl von Abtasteinheiten (20.1, 20.2; 120.1, 120.2; 320.1, 320.2; E1A, E2A, E1B, E2B), die die Anzahl der messtechnisch zu erfassenden Bewegungsfreiheitsgrade der beiden beweglichen Objekte (1, 2) übersteigt.

6. Positionsmessanordnung nach Anspruch 5, **dadurch gekennzeichnet, dass** die zweite Messteilung (11.2; 111.2; 211.2; 311.2) aus mehreren unterschiedlich angeordneten und/oder unterschiedlich ausgebildeten Teil-Messteilungen besteht, die in die Abtaststrahlengänge einzelner Abtasteinheiten (20.1, 20.2; 120.1, 120.2; 320.1, 320.2; E1A, E2A, E1B, E2B) einbringbar sind.

7. Positionsmessanordnung nach mindestens einem der vorhergehenden Ansprüche, **dadurch gekennzeichnet, dass** der Abtaststrahlengang jeder Abtasteinheit (20.1, 20.2; 120.1, 120.2; 320.1, 320.2; E1A, E2A, E1B, E2B) derart ausgebildet ist, dass darüber gleichzeitig die Erzeugung positionsabhängiger Abtastsignale entlang der Abstandsrichtung sowie entlang mindestens einer weiteren Richtung erfolgt.

8. Positionsmessanordnung nach mindestens einem der vorhergehenden Ansprüche, **dadurch gekennzeichnet, dass** eine Veränderung des Arbeitsbereichs bezüglich der räumlichen Anordnung von Abtasteinheit (20.1, 20.2; 120.1, 120.2; 320.1, 320.2; E1A, E2A, E1B, E2B) und Maßverkörperung (10;

110; 210; 310) in Form einer Verschiebung des Arbeitsbereichs erfolgt.

## Claims

1. Position measurement arrangement for determining the relative position of two objects (1, 2) which are arranged so as to be movable relative to one another along at least two degrees of freedom, having

   - at least one measurement standard (10; 110; 210; 310), which is connected to one of the two objects (1, 2) and has a first measurement graduation (11.1; 111.1; 211.1; 311.1) and at least a second measurement graduation (11.2; 111.2; 211.2; 311.2),
   - at least two scanning units (20.1, 20.2; 120.1, 120.2; 320.1, 320.2; E1A, E2A, E1B, E2B), which are connected to the other one of the two objects (1, 2) and are arranged at a distance from one another along the direction of extent (x) of the measurement standard (10; 110; 210; 310), wherein the scanning units (20.1, 20.2; 120.1, 120.2; 320.1, 320.2; E1A, E2A, E1B, E2B) each comprise optical scanning elements that serve for forming a scanning beam path to optically scan the measurement graduations (11.1; 111.1; 211.1; 311.1; 11.2; 111.2; 211.2; 311.2) and to thereby generate position-dependent scanning signals,
   - wherein the first measurement graduation (11.1; 111.1; 211.1; 311.1) and the second measurement graduation (11.2; 111.2; 211.2; 311.2) are matched to different working regions with respect to the spatial arrangement of the scanning unit (20.1, 20.2; 120.1, 120.2; 320.1, 320.2; E1A, E2A, E1B, E2B) and the measurement standard (10; 110; 210; 310), in which the scanning units (20.1, 20.2; 120.1, 120.2; 320.1, 320.2; E1A, E2A, E1B, E2B) can generate position-dependent scanning signals,

   **characterized in that** the second measurement graduation (11.2; 111.2; 211.2; 311.2)

   - is arranged on a region of the measurement standard (10; 110; 210; 310) that is located higher or lower than the first measurement graduation (11.1; 111.1; 211.1; 311.1) or
   - is arranged so as to be tilted with respect to the first measurement graduation (11.1; 111.1; 211.1; 311.1).

2. Position measurement arrangement according to Claim 1, **characterized in that** the second measurement graduation (11.2; 111.2; 211.2; 311.2)

   - either has a scanning distance from the scanning units (20.1, 20.2; 120.1, 120.2; 320.1, 320.2; E1A, E2A, E1B, E2B) that differs from the distance between the first measurement graduation (11.1; 111.1; 211.1; 311.1) and the scanning units (20.1, 20.2; 120.1, 120.2; 320.1, 320.2; E1A, E2A, E1B, E2B) or
   - has an angular orientation that differs from the orientation of the first measurement graduation (11.1; 111.1; 211.1; 311.1) with respect to the scanning units (20.1, 20.2; 120.1, 120.2; 320.1, 320.2; E1A, E2A, E1B, E2B) .

3. Position measurement arrangement according to at least either of the preceding claims, **characterized in that** the second measurement graduation (11.2; 111.2; 211.2; 311.2) is arranged and/or formed such that the working regions of at least two scanning units (20.1, 20.2; 120.1, 120.2; 320.1, 320.2; E1A, E2A, E1B, E2B), which scan in each case one of the two measurement graduations (11.1; 111.1; 211.1; 311.1; 11.2; 111.2; 211.2; 311.2) overlap in a transfer region (U).

4. Position measurement arrangement according to at least one of Claims 1-3, **characterized in that** the second measurement graduation (11.2; 111.2; 211.2; 311.2) consists of a plurality of differently arranged and/or differently formed partial measurement graduations.

5. Position measurement arrangement according to at least one of the preceding claims, **characterized by** a number of scanning units (20.1, 20.2; 120.1, 120.2; 320.1, 320.2; E1A, E2A, E1B, E2B) that is greater than the number of degrees of freedom of movement of the two movable objects (1, 2) that are to be captured by way of measurement.

6. Position measurement arrangement according to Claim 5, **characterized in that** the second measurement graduation (11.2; 111.2; 211.2; 311.2) consists of a plurality of differently arranged and/or differently formed partial measurement graduations that are able to be introduced into the scanning beam paths of individual scanning units (20.1, 20.2; 120.1, 120.2; 320.1, 320.2; E1A, E2A, E1B, E2B).

7. Position measurement arrangement according to at least one of the preceding claims, **characterized in that** the scanning beam path of each scanning unit (20.1, 20.2; 120.1, 120.2; 320.1, 320.2; E1A, E2A, E1B, E2B) is formed such that at the same time position-dependent scanning signals are generated via it along the distance direction and along at least one further direction.

8. Position measurement arrangement according to at least one of the preceding claims, **characterized in that** the working region with respect to the spatial arrangement of the scanning unit (20.1, 20.2; 120.1, 120.2; 320.1, 320.2, E1A, E2A, E1B, E2B) and the measurement standard (10; 110; 210; 310) is modified in the form of a displacement of the working region.

## Revendications

1. Ensemble de mesure de position destiné à déterminer la position relative de deux objets (1, 2) qui sont disposés de manière à être mobiles l'un par rapport à l'autre suivant au moins deux degrés de liberté, ledit ensemble comprenant

   - au moins un étalon (10 ; 110 ; 210 ; 310) qui est relié à l'un des deux objets (1, 2) et qui possède une première graduation de mesure (11.1 ; 111.1 ; 211.1 ; 311.1) et au moins une deuxième graduation de mesure (11.2 ; 111.2 ; 211.2 ; 311.2),
   - au moins deux unités de balayage (20.1, 20.2 ; 120.1, 120.2 ; 320.1, 320.2 ; E1A, E2A, E1B, E2B) qui sont reliées à l'autre des deux objets (1, 2) et qui sont disposées à distance l'une de l'autre le long de la direction d'extension (x) de l'étalon (10 ; 110 ; 210 ; 310), les unités de balayage (20.1, 20.2 ; 120.1, 120.2 ; 320.1, 320.2 ; E1A, E2A, E1B, E2B) comprenant chacune des éléments de balayage optique qui servent à former un trajet de faisceau de balayage afin de balayer optiquement les graduations de mesure (11.1 ; 111.1 ; 211.1 ; 311.1 ; 11.2 ; 111.2 ; 211.2 ; 311.2) et, ce faisant, générer des signaux de balayage dépendant de la position,
   - la première graduation de mesure (11.1 ; 111.1 ; 211.1 ; 311.1) et la deuxième graduation de mesure (11.2 ; 111.2 ; 211.2 ; 311.2) étant adaptées, en ce qui concerne la disposition spatiale de l'unité de balayage (20.1, 20.2 ; 120.1, 120.2 ; 320.1, 320.2 ; E1A, E2A, E1B, E2B) et de l'étalon (10 ; 110 ; 210 ; 310), à différentes zones de travail dans lesquelles les unités de balayage (20.1, 20.2 ; 120.1, 120.2 ; 320.1, 320.2 ; E1A, E2A, E1B, E2B) peuvent générer des signaux de balayage dépendant de la position,

   **caractérisé en ce que**
   la deuxième graduation de mesure (11.2 ; 111.2 ; 211,2 ; 311.2)

   - est disposée sur une zone de l'étalon (10 ; 110 ; 210 ; 310) qui est augmentée ou diminuée par rapport à la première graduation de mesure (11.1 ; 111.1 ; 211.1 ; 311.1) ou

   - est disposée de manière inclinée par rapport à la première graduation de mesure (11.1 ; 111.1 ; 211.1 ; 311.1).

2. Ensemble de mesure de position selon la revendication 1, **caractérisé en ce que** la deuxième graduation de mesure (11,2 ; 111,2 ; 211,2 ; 311,2) présente

   - par rapport aux unités de balayage (20.1, 20.2 ; 120.1, 120.2 ; 320.1, 320.2 ; E1A, E2A, E1B, E2B) une distance de balayage qui est différente de la distance entre la première graduation de mesure (11.1 ; 111.1 ; 211.1 ; 311.1) et les unités de balayage (20.1, 20.2 ; 120.1, 120.2 ; 320.1, 320.2 ; E1A, E2A, E1B, E2B) ou
   - une orientation angulaire qui est différente de l'orientation de la première graduation de mesure (11.1 ; 111.1 ; 211.1 ; 311.1) par rapport aux unités de balayage (20.1, 20.2 ; 120.1, 120.2 ; 320.1, 320.2 ; E1A, E2A, E1B, E2B).

3. Ensemble de mesure de position selon l'une au moins des revendications précédentes, **caractérisé en ce que** la deuxième graduation de mesure (11.2 ; 111.2 ; 211.2 ; 311.2) est disposée et/ou conçue de telle manière que les zones de travail d'au moins deux unités de balayage (20.1, 20.2 ; 120.1, 120.2 ; 320.1, 320.2 ; E1A, E2A, E1B, E2B), qui balaient chacune l'une des deux graduations de mesure (11.1 ; 111.1 ; 211.1 ; 311.1 ; 11.2 ; 111.2 ; 211.2 ; 311.2), se chevauchent dans une zone de transfert (U).

4. Ensemble de mesure de position selon l'une au moins des revendications 1 à 3, **caractérisé en ce que** la deuxième graduation de mesure (11.2 ; 111.2 ; 211.2 ; 311.2) comprend plusieurs sous-graduations de mesure disposées différemment et/ou conçues différemment.

5. Ensemble de mesure de position selon l'une au moins des revendications précédentes, **caractérisé par** un certain nombre d'unités de balayage (20.1, 20.2 ; 120.1, 120.2 ; 320.1, 320.2 ; E1A, E2A, E1B, E2B) qui dépasse le nombre de degrés de liberté de mouvement, à détecter par une technique de mesure, des deux objets mobiles (1, 2) .

6. Ensemble de mesure de position selon la revendication 5, **caractérisé en ce que** la deuxième graduation de mesure (11.2 ; 111.2 ; 211.2 ; 311.2) comprend plusieurs sous-graduations de mesure disposées différemment et/ou conçues différemment qui peuvent être insérées dans les trajets de faisceau de balayage d'unités de balayage individuelles (20.1, 20.2 ; 120.1, 120.2 ; 320.1, 320.2 ; E1A, E2A, E1B, E2B).

**7.** Ensemble de mesure de position selon l'une au moins des revendications précédentes, **caractérisé en ce que** le trajet de faisceau de balayage de chaque unité de balayage (20.1, 20.2 ; 120.1, 120.2 ; 320.1, 320.2 ; E1A, E2A, E1B, E2B) est conçu de façon à générer simultanément des signaux de balayage dépendant de la position le long de la direction de distance et le long d'au moins une autre direction.

**8.** Ensemble de mesure de position selon l'une au moins des revendications précédentes, **caractérisé en ce qu'**une modification de la zone de travail par rapport à la disposition spatiale de l'unité de balayage (20.1, 20.2 ; 120.1, 120.2 ; 320.1, 320.2 ; E1A, E2A, E1B, E2B) et de l'étalon (10 ; 110 ; 210 ; 310) est effectuée sous la forme d'un décalage dans la zone de travail.

Fig. 1a

Fig. 1b

Fig. 1c

Fig. 2

Fig. 3a

Fig. 3b

Fig. 3c

Fig. 4

Fig. 5a

Fig. 5b

Fig. 5c

Fig. 5d

E1A

E2A

E1B

E2B

411.22

411.23

Fig. 6a

411.21

y

z    x

E1A

E2A

E1B

E2B

411.22

411.23

Fig. 6b

411.21

y

z    x

E1A

E2A

E1B

E2B

411.22

411.23

Fig. 6c

411.21

y

z    x

E1A

411.21

411.22

E2B

E1B

411.23

Fig. 5d

E2A

y

z    x

**EP 3 443 304 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2679962 A1
- EP 2741058 A2
- EP 1762828 A2